(19) Europäisches Patentamt
European Patent Office
Office européen des brevets

(11) **EP 3 089 049 A1**

(12) **EUROPEAN PATENT APPLICATION**
published in accordance with Art. 153(4) EPC

(43) Date of publication:
**02.11.2016 Bulletin 2016/44**

(51) Int Cl.:
***G06F 17/30*** (2006.01)

(21) Application number: **14899925.3**

(22) Date of filing: **26.12.2014**

(86) International application number:
**PCT/JP2014/084713**

(87) International publication number:
**WO 2016/103519 (30.06.2016 Gazette 2016/26)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Ubic, Inc.**
**Minato-ku, Tokyo 108-0075 (JP)**

(72) Inventors:
• **TAKEDA Hideki**
**Tokyo 108-0075 (JP)**

• **HANATANI Akiteru**
**Tokyo 108-0075 (JP)**
• **TAKEDA Takanori**
**Tokyo 108-0075 (JP)**

(74) Representative: **Hoefer & Partner Patentanwälte mbB**
**Pilgersheimer Straße 20**
**81543 München (DE)**

(54) **DATA ANALYSIS SYSTEM, DATA ANALYSIS METHOD, AND DATA ANALYSIS PROGRAM**

(57)    A data analysis system according to the present invention includes: a classification information acquisition unit that acquires classification information indicative of classification of a web page; a collection unit that collects a data group relating to web pages on a network; a data classification unit that classifies each of a plurality of pieces of classification data, which is included in the data group, by associating the classification information with each of the plurality of pieces of classification data; a data evaluation unit that evaluates a relation between unclassified data, which is included in the data group and is different from the classification data, and the classification information according to a classification result by the data classification unit; and a presentation unit that presents recommendation information to a user on the basis of the evaluation by the data evaluation unit.

FIG.1

EP 3 089 049 A1

**Description**

TECHNICAL FIELD

The present invention relates to a data analysis system for analyzing data.

BACKGROUND ART

In recent years, numerous information is abundant in a form of web pages over the network. It is possible to execute a search for web pages including words by using a word search on the network, but the possibility that the number of web pages found by the search might become enormous cannot be denied. Accordingly, there is a problem of difficulty in judging which web page is a web page with information that attracts a user's interest. Therefore, systems for recommending a web page which is estimated to include information desired by the user from among web pages have been conventionally devised.

For example, PTL 1 discloses a recommendation system that presents the user's favorite web page on the basis of profile information of the user.

CITATION LIST

PATENT LITERATURE

PTL 1: Japanese Patent Application Laid-Open (Kokai) Publication No. 2012-142704

SUMMARY OF INVENTION

PROBLEMS TO BE SOLVED BY THE INVENTION

However, the recommendation which simply uses the user's profile information only includes keywords about topics that the user likes, and the problem is that the possibility to present a web page which may truly attract the user's interest cannot be guaranteed.
Therefore, in light of the above-described problem, it is an object of the present invention to provide a data analysis system capable of providing a user with information which interests the user, by using a method different from conventional methods.

MEANS FOR SOLVING THE PROBLEMS

In order to solve the above-described problem, a data analysis system according to an embodiment of the present invention includes: a classification information acquisition unit that acquires classification information indicative of classification of a web page; a collection unit that collects a plurality of web pages on a network as a data group; a data classification unit that classifies each of a plurality of pieces of classification data, which is part of the plurality of web pages included in the data group, by associating the classification information with each of the plurality of pieces of classification data; a data evaluation unit that evaluates a relation between unclassified data, which is part of the plurality of web pages included in the data group and is different from the classification data, and the classification information according to a classification result by the data classification unit; and a presentation unit that presents recommendation information to a user on the basis of the evaluation by the data evaluation unit.
Furthermore, a data analysis method according to an embodiment of the present invention is a data analysis method executed by an information processing apparatus, the method including: a classification information acquisition step of acquiring classification information indicative of classification of a web page; a collection step of collecting a plurality of web pages on a network as a data group; a data classification step of classifying each of a plurality of pieces of classification data, which is part of the plurality of web pages included in the data group, by associating the classification information with each of the plurality of pieces of classification data; a data evaluation step of evaluating a relation between unclassified data that is a web page, which is part of the plurality of web pages included in the data group and is different from the classification data, and the classification information according to a classification result in the data classification step; and a presentation step of presenting recommendation information to a user on the basis of the evaluation in the data evaluation step.
Furthermore, a data analysis program according to an embodiment of the present invention is a data analysis program for having a computer execute data analysis processing for analyzing data, the data analysis processing including: a classification information acquisition step of acquiring classification information indicative of classification of a web page; a collection step of collecting a plurality of web pages on a network as a data group; a data classification step of classifying each of a plurality of pieces of classification data, which is part of the plurality of web pages included in the data group, by associating the classification information with each of the plurality of pieces of classification data; a data evaluation step of evaluating a relation between unclassified data that is a web page, which is part of the plurality of web pages included in the data group and is different from the classification data, and the classification information according to a classification result in the data classification unit; and a presentation step of presenting recommendation information to a user on the basis of the evaluation in the data evaluation step.

ADVANTAGEOUS EFFECTS OF INVENTION

The data analysis system, the data analysis method, and the data analysis program according to an embodiment of the present invention can present the recommendation information to the user. Therefore, the above-described data analysis system and so on have the advantageous effect of, for example, being capable of presenting the recommendation information about a web page(s) estimated to attract the user's interest without forcing the user to spend effort to search for the web page(s).

BRIEF DESCRIPTION OF DRAWINGS

[Fig. 1] Fig. 1 is a block diagram illustrating a functional configuration of a data analysis system according to an embodiment;
[Fig. 2] Fig. 2 is a diagram illustrating an example of a usage form of a web page for a user according to an embodiment;
[Fig. 3] Fig. 3 is a flowchart illustrating processing for creating teacher data for data analysis;
[Fig. 4] Fig. 4 is a flowchart illustrating processing for presenting a web page estimated to attract the user's interest; and
[Fig. 5] Fig. 5 is a diagram illustrating an example of an input form of classification information according to a variation.

DESCRIPTION OF EMBODIMENTS

<Embodiment>

An embodiment of a data evaluation system according to the present invention will be described with reference to drawings.

<Outline>

The data analysis system according to this embodiment presents information about a web page estimated to attract the user's interest on the basis of web pages accessed by the user. The above-described data analysis system judges the web page estimated to attract the user's interest, on the basis of, for example, whether the user has entered any comments on the web pages accessed by the user or not (according to the user's activities on the network). This is because the web pages on which the user has left any comments can be estimated to include some information that attracts the user's interest.
So, the above-described data analysis system firstly acquires information about web pages, which the user has ever accessed, and classifies them into web pages in which the user is interested, and web pages in which the user is not interested, depending on whether the user has left comments on the web pages or not.
Then, the above-described data analysis system selects keywords (data elements such as morphemes and sentences) from document information included in the web pages, in which the user is interested, and determines an evaluation value (a keyword weight or an evaluation result) of each keyword. Similarly, the data analysis system selects keywords from document information of the web pages, in which the user is not interested, and determines the evaluation value of each keyword. Incidentally, evaluation objects at this time are not limited to the keywords and the evaluation may be executed on, for example, sentences or links between the keywords.
Next, the above-described data analysis system acquires information about web pages which the user has never accessed. Then, the data analysis system selects the evaluated keywords from document information included in the relevant web pages and calculates a score of the web pages on the basis of the evaluation values which are set to the keywords. Then, for example, when the score of the relevant web page exceeds a predetermined threshold value, the above-described data analysis system presents, for example, information about the relevant web page as recommended information for the user (recommendation information).
The web page(s) which the user has accessed and left comments on includes information which attracts the user's interest for whatever reason and the data analysis system can present the recommended information (recommendation information) related to other web pages including information estimated to have many common points with the above-mentioned web page to the user.

The details of the data analysis system will be explained below.

<Configuration>

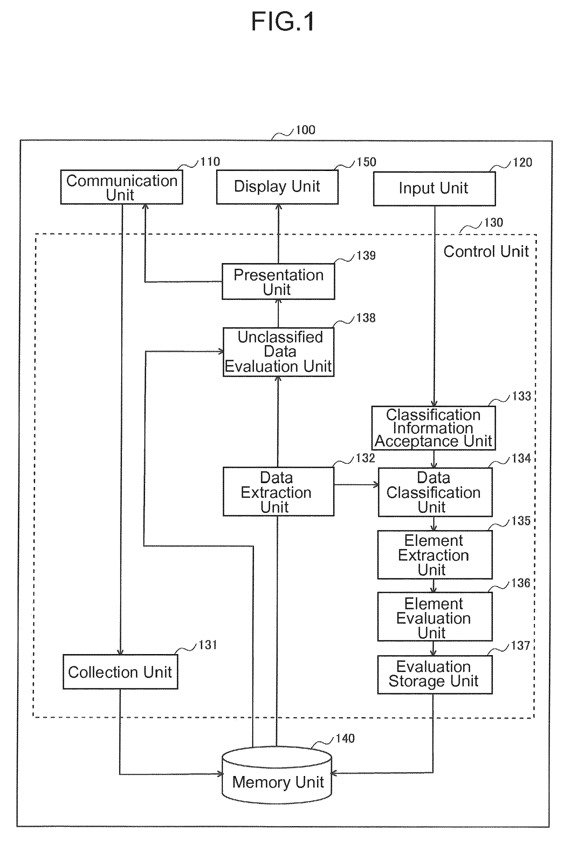

Fig. 1 is a block diagram illustrating a functional configuration of a data analysis system 100.

The data analysis system 100 includes a communication unit 110, an input unit 120, a control unit 130, a memory unit 140, and a display unit 150 as illustrated in Fig. 1.

The communication unit 110 has a function that accesses web pages. Furthermore, the communication unit 110 also has a function that transmits recommended information transmitted from the control unit 130 to a user terminal when it is possible to establish communications with the user terminal.

The input unit 120 accepts input of access information about the web pages accessed by the user and comment information indicating whether the user left comments about the accessed web pages or not. The input unit 120 also accepts input of information indicating on what basis classification is performed as the classification information.

The control unit 130 is a processor having a function that controls each unit of the data analysis system 100 with reference to various kinds of data stored in the memory unit 140. The control unit 130 controls various functions of the data analysis system 100 in an integrating manner.

The control unit 130 includes a collection unit 131, a data extraction unit 132, a classification information accepting unit 133, a data classification unit 134, an element extraction unit 135, an element evaluation unit 136, an evaluation storage unit 137, an unclassified data evaluation unit 138, and a presentation unit 139.

The collection unit 131 has a function that accesses a network (for example, the Internet or the intranet) via the communication unit 110, acquires web page information about web pages on that network, and records the web page information in the memory unit 140.

The data extraction unit 132 has a function that extracts data from a group of information relating to the web pages, which are stored in the memory unit 140, as the need arises. The data extraction unit 132 transmits information about the web pages accessed by the user, who is input by the user to the input unit 120, to the data classification unit 134. Furthermore, the data extraction unit 131 extracts information about web pages other than the web pages accessed by the user, who is input by the user to the input unit 120, from the memory unit 140 and transmits it to the unclassified data evaluation unit 138.

The classification information accepting unit 133 accepts the classification information indicative of a standard for classifying each web page, which the user has ever accessed, from the input unit 120. Under this circumstance in this embodiment, the classification information is information indicative of either "a comment is entered" or "no comment is entered." Specifically speaking, in this embodiment, the classification information indicates whether the user has entered any comment or not, and is a binary flag value of either "a comment is entered" or "no comment is entered." It should be noted that under this circumstance, the classification information is binary data which is the binary value; however, the classification information may be data capable of expressing more than the binary value to classify the web pages into a plurality of categories. For example, the classification information may be designed to classify the web pages in three stages such as "web pages which have not been accessed at all," "web pages which have been accessed, but on which no comments have been left," and "web pages which have been accessed and on which comments have been left."

The data classification unit 134 has a function that classifies the web pages transmitted from the data extraction unit 132 into web pages on which the user has entered comments, and web pages on which the user has not entered comments, on the basis of the classification information accepted by the classification information accepting unit 133. Specifically speaking, the data classification unit 134 classifies each of the web pages transmitted from the data extraction unit 132 by associating it with the classification information (information indicating that a comment is entered, or information indicating that no comment is entered). The data classification unit 134 transmits web page information, with which the classification information is associated, to the element extraction unit 135.

The element extraction unit 135 has a function that extracts data elements from the web pages associated with the classification information by the data classification unit 134. For example, keywords (so-called morphemes), images, voices, and moving images of the content of articles included in the web pages may be used as data elements. Incidentally, in a case of the voices, the data elements may be partial voices obtained by dividing voice information posted on the web pages; and in a case of the moving images, the data elements may be part of frames constituting the moving images. The element extraction unit 135 transmits the extracted data elements to the element evaluation unit 136.

The data elements extracted by the element extraction unit 135 are selected by the data analysis system 100 in accordance with a specified selection standard. Under this circumstance, a method for selecting the data elements may be designed to highly evaluate data elements included in one or more web pages on which comments are entered, and to not evaluate data elements included in one or more web pages on which no comment is entered. For example, regarding the data elements, keywords that remain after removing keywords extracted from the one or more web pages, on which no comment is entered, from keywords extracted from one or more web pages on which comments are entered may be selected as the data elements. Alternatively, for example, the keywords which are extracted from one or more web pages with comments and whose appearance frequency is higher than, by a certain or higher value, that of the same keywords extracted from one or more web pages without comments may be selected as the data elements. Furthermore, the data elements may be designated by the user to the data analysis system 100, using the input unit 120.

The element evaluation unit 136 has a function that evaluates each data element extracted by the element extraction unit 135 in accordance with a predetermined specified evaluation standard. The element evaluation unit 136 can evaluate the data elements by using, as the specified evaluation standard, a transmitted information amount indicative of a dependency relationship with the classification information with respect to the data elements. For example, when the element extraction unit 135 extracts a keyword as a data element from document information (text) included in a web page, it evaluates that keyword by calculating a weight of the keyword.

The element evaluation unit 136 calculates the weight of each data element extracted by the element extraction unit 135 in accordance with a specified algorithm. The element evaluation unit 136 can re-evaluate an evaluation value of each data element and recalculate the weight of the data element until a calculated score of a web page on which the user entered a comment becomes superior to a score of a web page on which the user has not entered any comment. Specifically speaking, the element evaluation unit 136 firstly calculates scores of classified web pages on the basis of the weight calculated once. The element evaluation unit 136 arranges the web pages according to the scores. When this happens, it is desirable that regarding the evaluation by the data analysis system 100, web pages on which comments are entered should be arranged in superior positions and web pages on which no comment is entered should be arranged in inferior positions. So, for example, the element evaluation unit 136 executes the calculation until the scores of the web pages on which comments are entered are arranged in the superior positions and the scores of the web pages on which no comment is entered are arranged in positions inferior to the above-described scores. Then, the element evaluation unit 136 calculates an intermediate value between a minimum value of the scores of the web pages on which the user has entered comments, and a highest value of the scores of the web pages on which the user has not entered any comment, as a threshold value for judging a web page which may possibly attract the user's interest.

The element evaluation unit 136 uses, for example, the following expression (1) to calculate the weight wgt of data elements.

[Math. 1]

$$wgt_{i,L} = \sqrt{wgt_{L-i}^2 + \gamma_L wgt_{i,L}^2 - \vartheta} = \sqrt{wgt_{i,L}^2 + \sum_{l=1}^{L} (\gamma_L wgt_{i,L}^2 - \vartheta)}$$

$$\cdots (1)$$

In the above expression, wgt represents an initial value of the weight of an i-th selected keyword before learning. Also, wgt represents the weight of the i-th selected keyword after L-th learning; and y means a learning parameter for L-th learning and $\theta$ means a threshold value of learning effects.

The element evaluation unit 136 transmits the calculated evaluation value of each data element and the threshold value to the evaluation storage unit 137.

The evaluation storage unit 137 has a function that associates each data element evaluated by the element evaluation unit 136 with its evaluation and stores them in the memory unit 140. Furthermore, the evaluation storage unit 137 also stores the threshold value in the evaluation storage unit 137.

The unclassified data evaluation unit (data evaluation unit) 138 has a function that evaluates whether a web page(s) which has been transmitted from the data extraction unit 132 and has never been accessed by the user attracts the user's interest or not (that is, the relation between the relevant web page and the classification information indicating that "a comment is entered"), by using the evaluation of the data element stored in the memory unit 140.

Specifically speaking, the unclassified data evaluation unit 138 identifies data elements included in the web page(s) which has been transmitted from the data extraction unit 132 and has never been accessed by the user. Then, the unclassified data evaluation unit 138 identifies evaluation values of the respective data elements by referring to the evaluation value of each data element stored in the memory unit 140. Subsequently, the unclassified data evaluation unit 138 integrates the scores of the respective data elements included in the web page (unclassified data), which has never been accessed by the user, and performs scaling so as to find a value within a predetermined range (for example, from 0 to 10000), thereby calculating the score of the relevant web page.

More specifically, for example, the unclassified data evaluation unit 138 generates a data element vector with respect to the data elements extracted for the web page. The data element vector is a vector (bag of words) based on whether the evaluated data elements in the memory unit 140 are included in the web page or not.

When the evaluated data elements are included in the web page, the unclassified data evaluation unit 138 changes a corresponding vector value of the data element vector from "0" to "1." Then, the unclassified data evaluation unit 138 thereby generates the data element vector for that web page on the basis of the data elements extracted from the web page. The unclassified data evaluation unit 138 calculates score S of the web page by calculating an inner product between the generated data element vector and the evaluation value (weight) of each data element (see the following expression (2)).

[Math. 2]

$$S = \mathbf{w}^T \cdot \boldsymbol{s} \qquad \cdots (2)$$

In the above expression, s represents a keyword vector and w represents a weight vector. It should be noted that T means transposition. Incidentally, the unclassified data evaluation unit 138 can calculate one score for each web page as described above and also calculate one score for each specified break (such as a sentence, a paragraph, a partial voice divided into a specified length, or a partial moving image including a specified number of frames) (the details will be explained later).

The presentation unit 139 has a function that presents information about the web page, which is determined by the unclassified data evaluation unit 138 to have the score equal to or more than a certain value, as the recommended information to the user. Incidentally, it is mentioned above that the presentation unit 139 presents information about the web page, which is designated to have the score equal to or more than the certain value, as the recommended information to the user; however, this is just one example and in another example, the presentation unit 139 may present web pages in descending order from one with the highest score. The presentation unit 139 transmits the recommended information to the communication unit 120 or the display unit 150 as the need arises. For example, when the communication unit 120 is connected to the user's communication terminal so that they can communicate with each other, the presentation unit 139 transmits the recommended information to the communication unit 120 and, in other cases, transmits the recommended information to the display unit 150.

Furthermore, the recommended information (recommendation information) presented by the presentation unit 139 is not only the information about web pages, but also widely includes, for example, information about other users or organizations that will probably get along well with the user, information about other users or organizations that seem to adversely affect the user, other arbitrary information estimated to be deeply related to the user, and an arbitrary combination of these pieces of information.

The memory unit 140 is a storage medium having a function that stores necessary programs and various kinds of data to be used by the data analysis system 100 to analyze the data. The memory unit 140 is implemented by, for example, HDDs (Hard Disc Drives), SSDs (Solid State Drives), semiconductor memories, or flash memories. It should be noted that Fig. 1 illustrates the configuration of the data analysis system 100 equipped with the memory unit 140, but the memory unit 140 may be a storage device outside the data analysis system 100 and connected to the data analysis system 100 so that they can communicate with each other.

The display unit 150 is a monitor having a function that displays images based on display data which is output from the control unit 130. The display unit 150 may be implemented by, for example, an LCD (Liquid Crystal Display), a PDP (Plasma Display Panel), or an organic EL (Electro Luminescence) display. In this embodiment, the display unit 150 displays the recommended information, which has been transmitted from the presentation unit 139, for the user.

<Web Pages>

Now, web pages will be briefly explained below.

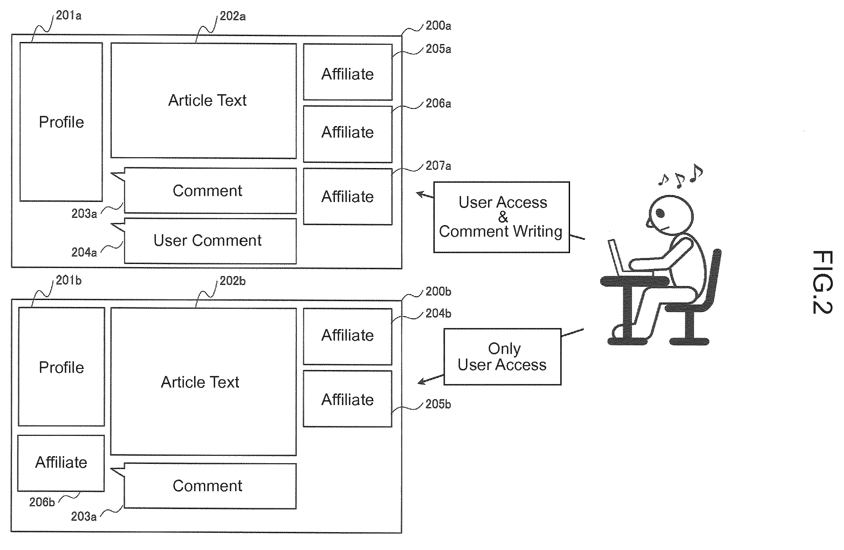

Fig. 2 is a diagram illustrating an example of web pages accessed by the user, that is, a web page on which the user entered a comment, and a web page on which the user did not enter a comment.

A web page 200a illustrated in Fig. 2 is a web page which has been accessed by the user and on which the user has entered a comment.

The web page 200 includes a profile 201 a indicative of information of an administrator of the web page 200a, an article text 202a written by the administrator, a comment 203a entered on the article, a user comment 204a, and affiliates 205a to 207a indicative of various product advertisements as illustrated in Fig. 2. The web page 200 includes these pieces of information and is stored in a web server. The web page 200 is a page where a person accessed to the web page 200 is permitted to enter a comment; and the user writes the comment 204a of their impression on the article text 202a. The written information is associated and stored in the web server. The written information is associated with an user ID or user information for identifying the user, who has written the information, and is then stored. Furthermore, the web page 200a is also associated with identification information (such as a MAC address) of a terminal accessed by the user as information indicative of the user's access and such identification information is then stored. On the other hand, a web page 200b illustrated in Fig. 2 is a web page which has been accessed by the user and on which the user has not entered any comment.

The web page 200b includes a profile field 201 b indicative of information of the administrator of the web page 200b, an article field 202b written by the administrator, a comment 203b entered on the article, and affiliates 204b to 206b indicative of product advertisements. Although the user has accessed that page, the user was not drawn to enter a comment. However, the identification information of the terminal accessed by the user is associated with the page and is then stored as information indicative of the user's access.

It should be noted that the structure of the web pages illustrated in Fig. 2 is one example; and needless to say, there are various structures of web pages.

<Operation>

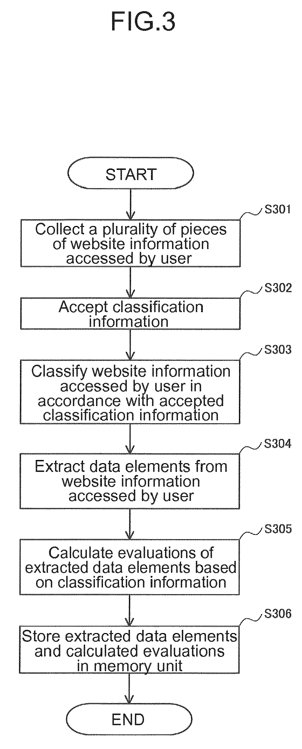

Fig. 3 is a flowchart illustrating the operation of the data analysis system 100 to analyze a web page accessed by the user and calculate the evaluation of data elements.

As illustrated in Fig. 3, the data analysis system 100 accepts information about the web page accessed by the user via the input unit 120 (step S301). The information about the web page may be any information capable of identifying the relevant web page and may be, for example, an address of the relevant web page or may be full-page information. Next, the data analysis system 100 accepts the classification information via the input unit 120 (step S302).

The data classification unit 134 classifies the web page accepted from the data extraction unit 132 in accordance with the classification information accepted by the classification information accepting unit 133 (step S303). The data classification unit 134 classifies the web page accessed by the user according to whether the user has entered a comment or not.

The element extraction unit 135 extracts the data elements from the web page accessed by the user (step S304).

The element evaluation unit 136 evaluates each data element extracted by the element extraction unit 135 and transmits its evaluation value to the evaluation storage unit 137 (step S305).

The evaluation storage unit 137 associates the transmitted data elements with their evaluation values and stores them in the memory unit 140 (step S306).

The operation of the data analysis system 100 to determine each evaluation of the data elements has been described above. The processing illustrated in Fig. 3 is also processing for acquiring web pages accessed by the user (particularly, web pages on which comments are entered, that is, the classification data) as teacher data (training data) and extracting a pattern included in the teacher data (for example, keywords or conceptually distribution of the keywords) in order to classify the unclassified data (web pages which have not been accessed by the user). By executing the processing illustrated in Fig. 3, preprocessing for identifying web pages, which can be estimated to attract interests of the user, from among the web pages which the user has never accessed is completed.

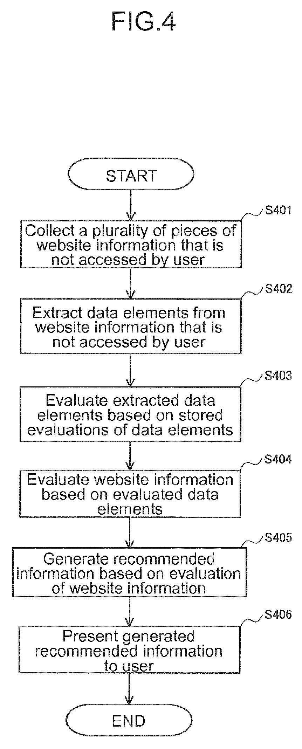

Fig. 4 is a flowchart illustrating the operation of the data analysis system 100 to present the recommended information from web pages, which have never been accessed by the user, to the user.

Referring to Fig. 4, the collection unit 131 for the data analysis system 100 accesses the network via the communication unit 110 and collects information about various kinds of web pages (step S401). The collection unit 131 stores the collected web page information in the memory unit 140.

The data extraction unit 132 extracts information about the web pages, which have never been accessed by the user, from the memory unit 140 and transmits it to the unclassified data evaluation unit 138.

The unclassified data evaluation unit 138 extracts the data elements from the web pages transmitted from the data extraction unit 132 (step S402). The unclassified data evaluation unit 138 acquires the evaluations of the extracted data elements from the memory unit 140 (step S403). Then, the unclassified data evaluation unit 138 calculates the scores of the web pages, from which the relevant data elements have been extracted, on the basis of the evaluation of each acquired data element (for example, by using the aforementioned expression (2)) (step S404). The unclassified data evaluation unit 138 transmits the calculated scores of the web pages and their corresponding web page information to the presentation unit 139.

The presentation unit 139 generates recommended information for the user on the basis of the transmitted scores of the web pages and the web page information (step S405). Under this circumstance, it is assumed that the recommended information may be address information of a web page having a certain or higher score. The presentation unit 139 transmits the generated recommended information to the communication unit 110 or the display unit 150.

The communication unit 110 or the display unit 150 outputs the recommended information transmitted from the presentation unit 139. In a case of the communication unit 110, it transmits the transmitted recommended information to a terminal to which it is connected. In a case of the display unit 150, it displays the transmitted recommended information on a monitor.

It can be said that the processing illustrated in Fig. 4 is processing for classifying the unclassified data (web page information) into web pages which attract the user's interest, and web pages which do not attract the user's interest. In other words, it can be said that it is processing for evaluating the relation between the unknown data and a specified incident (for example, the relevant web page matches the user's taste) by analyzing whether the pattern extracted from the teacher data is included in the unknown data (unclassified data) or not.

<Conclusion>

As a result of the above-mentioned processing, web pages which have never been accessed by the user can be classified into web pages estimated to attract the user's interest and web pages estimated to not attract the user's interest on the basis of web pages on which the user entered comments and web pages on which the user entered no comments, and information about the web pages can be presented as the recommended information. The data analysis system 100 according to the above-described embodiment can present the web pages estimated to attract the user's interest automatically without any special operation by the user.

<Variations>

The above-mentioned Embodiment 1 and Embodiment 2 have described embodiments of the invention according to the present invention; however, it is needless to say that the concept of the present invention is not limited to these embodiments. Various kinds of variations included as the concept of the present invention will be explained below.

(1) In the above-described embodiment, an example in which the address of the relevant web page itself is presented as the recommended information; however, the invention is not limited to this example.

Any information may be used as the recommended information in the embodiment as long as it is information related to the web page.

The presentation unit 139 may acquire, for example, information posted on a web page about an administrator who operates the web page from a profile and present the administrator as the recommended information. If the web page is, for example, an SNS site, it is possible to create an opportunity to have an interaction between the user and the administrator in such a case.

Alternatively, the presentation unit 139 may present, for example, an affiliate registered on the web page as the recommended information. Alternatively, the presentation unit 139 may present information which is created based on the affiliate and recommends that the user should purchase products or services, as the recommended information. Specifically speaking, as an affiliate as a product advertisement is placed on a web page, the data analysis system 100 acquires information about the affiliate included as information on the web page and presents it as recommended information. Since there is a high possibility that a web page on which the user shows their interest may include an affiliate which introduces the user's favorite products, the data analysis system 100 can present this and thereby evoke the user's willingness to purchase the products.

(2) In the above-described embodiment, the unclassified data evaluation unit 138 calculates the score of a web page by calculating an inner product between the data element vector and the weight of each data element; however, this calculation method is just an example. The unclassified data evaluation unit 138 may calculate the score of the web page by using other calculation methods. For example, the unclassified data evaluation unit 138 may calculate score S of the web page by using the following expression (3) instead of the aforementioned expression (2).

[Math. 3]

$$S = \frac{\sum_{j=1}^{N} m_j w_j^2}{\sum_{i=1}^{N} w_i^2} \quad \cdots (3)$$

In the above expression, $m_j$ represents appearance frequency of a j-th keyword and $W_i$ represents the weight of an i-th keyword.

(3) Although the aforementioned embodiment does not include detailed explanations, the unclassified data evaluation unit 138 may calculate the score based on co-occurrence between data elements. The details of such a method will be explained below.

For example, it is assumed that a first keyword and a second keyword appear as data elements on a web page which is an object to be evaluated. Under this circumstance, when the first keyword appears on the web page, the unclassified data evaluation unit 138 may execute scoring in consideration of the appearance frequency of the second keyword on the relevant web page (which may also be referred to as the correlation or co-occurrence between the first keyword and the second keyword).

In this case, the unclassified data evaluation unit 138 may calculate the score by using correlation matrix (co-occurrence matrix) C representing the correlation (co-occurrence) between the first keyword and the second keyword according to the following expression (4) instead of the aforementioned expression (2).

[Math. 4]

$$S = \mathbf{w}^T \cdot (\boldsymbol{C} \cdot \boldsymbol{s}) \qquad \cdots (4)$$

It should be noted that the above correlation matrix C is optimized in advance by using learning data which includes a specified number of specified texts. For example, when the keyword "price" appears in a certain text, a value obtained by normalizing the number of appearances of other keywords relative to the relevant keyword between 0 and 1 (which may also be referred to as the maximum likelihood estimate) is stored in an element of the above-mentioned correlation matrix C.

Since the score in consideration of the correlation between the keywords can be calculated by using the expression (4), it is possible to estimate a web page which may highly possibly attract the users' interest with high precision.

(4) Although the aforementioned embodiment does not include detailed explanations, the unclassified data evaluation unit 138 may calculate the score of each piece of partial data included in the web page (such as each sentence, paragraph, partial voice divided into a specified length, or partial moving image including a specified number of frames) and then calculate the score of the web page based on the above-obtained scores. The details of such a method will be explained below.

The unclassified data evaluation unit 138 generates a vector indicating whether or not a specified data element (for example, a keyword) is included in each piece of the partial data, for each piece of the partial data. Then, the unclassified data evaluation unit 138 executes scoring of the web page according to the following expression (5).

[Math. 5]

$$S = \mathbf{w}^T \cdot TFnorm\left(\sum_{i=1}^{M} \boldsymbol{C} \cdot \boldsymbol{s}_i\right) \qquad \cdots (5)$$

In the above expression, $s_i$ represents a vector corresponding to an i-th piece of the partial data. It should be noted that the expression (5) is a mathematical expression in consideration of co-occurrence (the expression uses co-occurrence matrix C). TFnorm in the above expression (5) can be calculated as indicated in the following expression (6).

[Math. 6]

$$TFnorm\left(\sum_{s}^{N} \boldsymbol{C} \cdot \boldsymbol{s}_s\right)$$

$$= \left(1 + \frac{\sum_{s}^{N}\sum_{j\neq 1}^{n} c_{1j}s_{js}}{TF_i}, 1 + \frac{\sum_{s}^{N}\sum_{j\neq 2}^{n} c_{2j}s_{js}}{TF_2}, \cdots, 1 + \frac{\sum_{s}^{N}\sum_{j\neq n}^{n} c_{nj}s_{js}}{TF_n}\right)^T$$

$$\cdots (6)$$

Now, in the above expression (6), $TF_i$ represents appearance frequency (Term Frequency) of an i-th data element (keyword), $s_{ji}$ represents a j-th element of the i-th keyword vector, and $c_{ji}$ represents a j-th row, i-th column element of the correlation matrix C.

As a result of integration of the aforementioned expressions (5) and (6), the unclassified data evaluation unit 138 can calculate the score of each web page on a partial data score basis by calculating the following expression (7).

[Math. 7]

$$S = \sum_{i=1}^{n} \left\{ w_i \left( 1 + \frac{\sum_{s}^{N} \sum_{j \neq n}^{n} c_{ij} s_{js}}{TF_i} \right) \right\} \qquad \cdots (7)$$

In the above expression (7), w is an i-th element of the weight vector w. Accordingly, the data analysis system 100 can execute scoring which reflects a meaning included in part of data (for example, a meaning of a sentence), so that it can present a web page estimated to attract the user's interest with much higher precision as the recommended information.

(5) In the above-described embodiment, a web page regarding which the recommended information is presented to the user is selected by using the threshold value. However, the method for selecting the web page is not limited to this example. It is needless to say that other methods may be used.

For example, the user may perform scoring with respect to each of a specified number of web pages, which have never been accessed by the user, and then present a certain proportion of web pages with top scores, as the recommended information, among the specified number of web pages.

Alternatively, a specified number of web pages with top scores may be presented as the recommended information. Alternatively, all the web pages on which scoring has been executed may be arranged in descending order from the highest score and be presented as the recommended information.

(6) The above-described embodiment has been described about an example where web pages which have been accessed by the user and on which the user has written comments are used as the basis for web pages including the content which attracts the user's interest, and information related to the web pages estimated to attract the user's interest from among web pages which have never been accessed by the user is presented as the recommended information.

However, an embodiment of the data analysis system according to the present invention is not limited to this example. Web pages which cannot be recommended to the user (for example, web pages including written articles whose content seems to be malicious) can be presented. That method will be explained below.

It should be noted that only the content of this variation which is different from that of the embodiment will be explained and an explanation about the content of the variation common with that of the embodiment will be omitted.

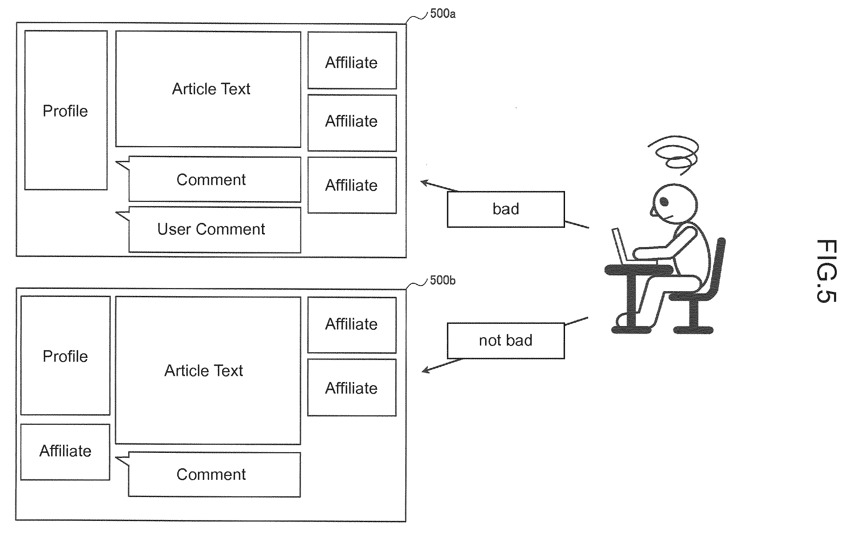

Fig. 5 is a diagram for explaining a method for associating the classification information in this variation.

In this variation, the user views a web page 500a or 500b, judges whether the content of descriptions is malicious or not, and then associates the classification information as illustrated in Fig. 5. Specifically speaking, the difference between the aforementioned embodiment and this variation is that while the data classification unit 134 automatically associates the classification information, depending on whether a comment is entered or not in the aforementioned embodiment, the user associates the classification information in this variation. In this variation, the classification information is two types of information indicative of "malicious" and "not malicious."

Furthermore, while the presentation unit 139 presents the recommended information in the aforementioned embodiment, web pages which are malicious and not suited to be viewed by the user are presented. In other words, the web pages which cannot be favorably recommended to the user are presented.

This variation is similar to the aforementioned embodiment, except that the processing by the data classification unit 134 and the presentation unit 139 is slightly different.

It is indicated that the data analysis system 100 described in this variation can also present information which cannot be recommended to the user.

(7) Although it is not particularly mentioned in the aforementioned embodiment, emotions of users (such as a user who wrote articles on web pages and users who entered comments) may be objects to be evaluated by the element evaluation unit in articles on web pages. Specifically speaking, evaluation may be executed by placing importance to words expressing so-called emotions (adjectives and adjective verbs) on the web pages.

Specifically speaking, the web pages are classified as the classification information into web pages of affirmative impressions and web pages of negative impressions. The web pages of the affirmative impressions are generally affirmative words such as "fun," "entertaining," "like," and "good" and many words expressing a writer's emotions are used. The web pages of the negative impressions are generally negative words such as "boring," "hate," and "bad" and many words expressing the writer's emotions are used.

Therefore, keywords representing emotional expressions may be used as examples of data elements which are objects to be evaluated. In this case, adjectives and adjective verbs may be designated as the keywords in advance. A specific example of such an evaluation method will be explained.

The unclassified data evaluation unit 138 for the data analysis system 100 firstly associates emotional evaluations with respect to data elements included in web pages (data elements including the user's emotional expressions, for example, morphemes such as "fun" and "sad") and stores them. For example, the unclassified data evaluation unit 138 searches texts included in the web pages to check whether predetermined keywords (such keywords are words relating to emotions in a case of texts) are included in the relevant texts or not. If the keywords are included, the unclassified data evaluation unit 138 associates the keywords with emotion scores calculated in accordance with a specified standard and stores them in the memory unit 140.

Then, the unclassified data evaluation unit 138 extracts the keywords relating to predetermined emotions from a web page which has never been accessed by the user. Then, regarding the extracted keywords, the unclassified data evaluation unit 138 refers to the associated emotion scores in the memory unit 140. The unclassified data evaluation unit 138 integrates the emotion scores of the respective keywords extracted from the web page, thereby obtaining the emotion score of the web page.

For example, it is assumed that a sentence "this film was entertaining and I want to see it again" is included in the text and "entertaining" and "want to see" are stored in the memory unit 140 in advance and they are associated with the emotion scores "+1.4" and "+0.9," respectively. In this case, the unclassified data evaluation unit 138 calculates, for example, the emotion score "+2.3" as the emotion score of the relevant text by adding the above-mentioned scores. The presentation unit 139 may use the thus-calculated emotion score as a standard for presenting the recommended information. For example, information about web pages having the emotion scores of a certain or higher value, among the calculated emotion scores, may be presented as the recommended information.

It should be noted that in order to realize the above-described configuration, the data analysis system 100 may include, instead of the unclassified data evaluation unit 138, an emotion storage unit that stores the emotion scores of the keywords, and an emotion extraction unit that extracts data elements from web pages, which have never been accessed by the user, and extracts keywords relating to emotions as the data elements.

(8) In the aforementioned embodiment, web pages are treated as evaluation units; however, the invention is not limited to this example. Other units may be used as the evaluation units and, for example, the evaluation unit may be an evaluation on each article on a web page or an evaluation on each comment entered on the web page. Alternatively, the evaluation unit may be an evaluation on the user who entered a comment.

(9) In the aforementioned embodiment, web page information is used as a data group which is an object to be classified; however, the invention is not limited to this example. The data group which is the object to be classified may be, for example, a mail data group, a medical record data group, or a lawsuit-related data group.

In a case of mail data, the data analysis system 100 according to this embodiment can be used to classify mails into highly important mails for the user and mails which are not important for the user; in a case of medical record data, the data analysis system 100 according to this embodiment can be used to detect patients who require emergent medical treatment; and in a case of lawsuit-related data, the data analysis system 100 according to this embodiment can be used to identify necessary data for the lawsuit.

(10) The aforementioned embodiment has described an example of analyzing document information (texts); however, voices, images, and videos may be analyzed as mentioned earlier.

For example, in a case of voices, voices themselves may be objects to be analyzed or the analysis may be performed after converting voices into documents by means of voice recognition.

When a voice itself is to be analyzed, the voice is divided into partial voices of a specified length and the partial voices are used as objects to be analyzed. For example, if a voice stating "this film is entertaining" is obtained, the data analysis system 100 can extract the partial voices "film" and "entertaining" from the relevant voice and evaluate the relation between unclassified voices and the classification information on the basis of the evaluation result of the partial voices. In such a case, the data analysis system 100 can classify the voice by using chronological data classification algorithms (such as the Markov model and the Kalman filter).

When converting voices into texts, they may be classified in the same manner as indicated in the aforementioned embodiment. Arbitrary voice recognition algorithms (such as a recognition method using the hidden Markov model) may be used for conversion of the voices into the texts.

Alternatively, the data analysis system 100 can analyze moving images. In this case, the data analysis system 100 may extract frame images included in the moving images, analyze the moving images by performing arbitrary pattern matching to see whether an image (such as a thing or a person) as a predetermined data element is included in frames of the moving images or not, and evaluate the relation with the classification information.

(11) Each functional unit of the data analysis system 100 (the information processing apparatus) may be implemented by a logical circuit (hardware) formed on, for example, an integrated circuit (IC chip). Each functional unit of the data analysis system 100 may be implemented by one or more integrated circuits or a plurality of functional units may be implemented by one integrated circuit.

Alternatively, the functions implemented by the respective functional units of the data analysis system 100 may be implemented by software by using a CPU (Central Processing Unit). In this case, the data analysis system 100 includes, for example: a CPU for executing commands of a data analysis program which is software for implementing each function; a ROM (Read Only Memory) or a storage device (collectively referred to as the "storage media") in which the above-mentioned game program and various kinds of data are recorded in a manner such that they can be read by the computer (or CPU); and a RAM (Random Access Memory) for expanding the above-mentioned data analysis program. Then, the object of the present invention is achieved as the computer (or CPU) reads the above-mentioned data analysis program from the above-mentioned storage media and executes it. As the above-mentioned storage media, "tangible media which are not temporary" such as tapes, disks, cards, semiconductor memories, or programmable logical circuits can be used. Furthermore, the above-mentioned data analysis program may be supplied to the above-mentioned computer via an arbitrary transmission medium capable of transmitting the relevant game program (such as a communication network or a broadcast wave). The present invention can also be implemented in a form of a data signal embedded in a carrier wave in which the above-mentioned data analysis program is embodied via electronic transmission.

It should be noted that the above-mentioned data analysis program can be implemented by using, for example, a script language such as ActionScript or JavaScript (registered trademarks), an object-oriented programming language such as Objective-C or Java (registered trademarks), and a markup language such as HTML5. Furthermore, a distributed data analysis system including an information processing apparatus equipped with the respective units, which implement the respective functions implemented by the above-mentioned data analysis program, and a server equipped with the respective units which implement the remaining functions different from the above-mentioned the respective functions also falls under the category of the present invention.

(12) The present invention has been described with reference to the respective drawings and examples; however, it should be noted that a person skilled in the art could easily make various variations or modifications on the basis of this disclosure. Therefore, it should be noted that these variations and modifications are included in the scope of the present invention. For example, functions or the like included in the respective functional units, the respective steps, and so on can be relocated and it is possible to combine a plurality of means or steps into one means or step or divide them.

(13) The configurations indicated in the aforementioned embodiment and various kinds of variations may be combined as appropriate.

<Supplement>

An embodiment of the data evaluation system according to the present invention and its advantageous effects will be described below.

(a) A data analysis system according to the present invention includes: a classification information acquisition unit (133) that acquires classification information indicative of classification of a web page; a collection unit (131) that collects a plurality of web pages on a network as a data group; a data classification unit (134) that classifies each of a plurality of pieces of classification data, which is part of the plurality of web pages included in the data group, by associating the classification information with each of the plurality of pieces of classification data; a data evaluation unit (138) that evaluates a relation between unclassified data, which is part of the plurality of web pages included in the data group and is different from the classification data, and the classification information according to a classification result by the data classification unit; and a presentation unit (139) that presents recommendation information to a user on the basis of the evaluation by the data evaluation unit.

Furthermore, a data analysis method according to the present invention is a data analysis method executed by an information processing apparatus, the method including: a classification information acquisition step (step S302) of acquiring classification information indicative of classification of a web page; a collection step (step S301) of collecting a plurality of web pages on a network as a data group; a data classification step (step S303) of classifying each of a plurality of pieces of classification data, which is part of the plurality of web pages included in the data group, by associating the classification information with each of the plurality of pieces of classification data; a data evaluation step (step S404) of evaluating a relation between unclassified data that is a web page, which is part of the plurality of web pages included in the data group and is different from the classification data, and the classification information according to a classification result in the data classification step; and a presentation step (step S406) of presenting recommended information to a user on the basis of the evaluation in the data evaluation step.

Furthermore, a data analysis program according to the present invention is a data analysis program for having a computer execute data analysis processing for analyzing data, the data analysis processing comprising: a classification information acquisition step of acquiring classification information indicative of classification of a web page; a collection step of collecting a plurality of web pages on a network as a data group; a data classification step of classifying each of a plurality of pieces of classification data, which is part of the plurality of web pages included in the data group, by associating the classification information with each of the plurality of pieces of classification data; a data evaluation step of evaluating a relation between unclassified data that is a web page, which is part of the plurality of web pages included in the data group and is different from the classification data, and the classification information according to a classification result in the data classification step; and a presentation step of presenting recommendation information to a user on the basis of the evaluation in the data evaluation step.

As a result, the data analysis system can present information about a web page which can be recommended to the user.

(b) The data analysis system according to (a) above may further include: an element extraction unit that extracts a data element(s) from each of the plurality of pieces of classification data associated with the classification information; and an element evaluation unit that evaluates the data element extracted by the element extraction unit in accordance with a specified standard, wherein the data evaluation unit may evaluate the relation by using the data element evaluated by the element evaluation unit as the classification result and the classification information associated with the classification data including the data element.

As a result, the unclassified data can be evaluated by evaluating the data element included in the unclassified data by using the evaluation of the data element included in the classification data.

(c) Regarding the data analysis system according to (b) above, the element evaluation unit may evaluate the data element by using, as the specified standard, a transmitted information amount indicative of a dependency relationship between the data element and the classification information associated with the classification data including the data element.

As a result, the data analysis system can use the so-called transmitted information amount as an evaluation value.

(d) The data analysis system according to (b) or (c) above may further include an evaluation storage unit that stores an evaluation result by the element evaluation unit in a specified storage device.

As a result, the data analysis system can execute evaluation of the unclassified data by accumulating evaluation values.

(e) Regarding the data analysis system according to any one of (a) to (d) above, the classification information may be information indicating whether the user has written information on the web page or not.

As a result, the data analysis system can judge whether the user was interested in the web page or not, on the basis of whether the user has written information or not, that is, whether the user has entered a comment or not.

(f) Regarding the data analysis system according to any one of (a) to (e) above, the classification information may be information indicating that the web page, on which the user has written the information, is classified as a web page which attracts the user's interest; and wherein the recommendation information may be information about the web page estimated to attract the user's interest among the unclassified data.

As a result, the data analysis system can present the web page estimated to attract the user's interest as the recommendation information.

(g) Regarding the data analysis system according to any one of (a) to (f) above, the web page may include advertisement information to recommend purchase of a product and the recommendation information may be the advertisement information.

As a result, the data analysis system can present the advertisement information included in the web page as the recommendation information for the user, so that it is possible to, for example, evoke the user's willingness to purchase a product included in the relevant advertisement.

(h) Regarding the data analysis system according to any one of (a) to (g) above, the classification information may be information indicative of classification as to whether the web page includes malicious information or not; wherein the data analysis system may further include a judgment information acquisition unit that acquires judgment information for judging whether the web page is malicious or not, according to input from the user; wherein the data classification unit may classify the classification data on the basis of the judgment information; and wherein the recommendation information may be information about the web page estimated to be malicious among the unclassified data.

As a result, the data analysis system can present the malicious web page as the recommendation information, so that the user can, for example, confirm the relevant recommendation information and try not to access the relevant web page.

(i) Regarding the data analysis system according to any one of (a) to (h) above, the unclassified data may be data including at least evaluation of an event by the user; an emotion extraction unit that extracts, from the unclassified data, an emotion of the user, who has created the unclassified data, about the event which has occurred based on the evaluation; and wherein the presentation unit may present the recommendation information further according to an extraction result by the emotion extraction unit.

As a result, the data analysis system can present the recommendation information based on emotional expressions included in the web page.

(j) The data analysis system according to (i) above may further include an emotion storage unit that associates a data element included in data with an emotion evaluation of the data element and stores them in a specified storage device, wherein the emotion extraction unit may extract the emotion from the unclassified data by evaluating the unclassified data by using the emotion evaluation associated with the data element.

As a result, the data analysis system can calculate the emotion evaluation of the data element included in the web page.

A data analysis system according to the present invention may be a data analysis system for evaluating a relation between unknown data and a specified incident by analyzing whether a pattern extracted from training data is included in the unknown data or not, wherein the data analysis system may include: a training data acquisition unit that acquires the training data by classifying web pages according to activities of a user in a network; a pattern extraction unit that extracts the pattern by evaluating a data element included in the training data in accordance with a specified standard; an unknown data evaluation unit that evaluates a degree of interest of the user with respect to information included in a web page as the unknown data by evaluating the relation on the basis of the extracted pattern; and a presentation unit that presents information included in the web page to the user in accordance with a result of the evaluation.

INDUSTRIAL APPLICABILITY

The present invention can be applied to a wide variety of arbitrary computers such as personal computers, server apparatuses, workstations, and mainframes.

REFERENCE SIGNS LIST

| | |
|---|---|
| 100 | data analysis system |
| 110 | communication unit |
| 120 | input unit |
| 130 | control unit |
| 131 | collection unit |
| 132 | data extraction unit |
| 133 | classification information accepting unit |
| 134 | data classification unit |
| 135 | element extraction unit |
| 136 | element evaluation unit |
| 137 | evaluation storage unit |
| 138 | unclassified data evaluation unit (data evaluation unit) |
| 139 | presentation unit |
| 140 | memory unit |
| 150 | display unit |

**Claims**

1. A data analysis system comprising:

    a classification information acquisition unit that acquires classification information indicative of classification of a web page;
    a collection unit that collects a plurality of web pages on a network as a data group;
    a data classification unit that classifies each of a plurality of pieces of classification data, which is part of the plurality of web pages included in the data group, by associating the classification information with each of the plurality of pieces of classification data;
    a data evaluation unit that evaluates a relation between unclassified data, which is part of the plurality of web pages included in the data group and is different from the classification data, and the classification information according to a classification result by the data classification unit; and
    a presentation unit that presents recommendation information to a user on the basis of the evaluation by the data evaluation unit.

2. The data analysis system according to claim 1, further comprising:

    an element extraction unit that extracts a data element from each of the plurality of pieces of classification data associated with the classification information; and
    an element evaluation unit that evaluates the data element extracted by the element extraction unit in accordance with a specified standard,
wherein the data evaluation unit evaluates the relation by using the data element evaluated by the element evaluation unit as the classification result and the classification information associated with the classification data including the data element.

3. The data analysis system according to claim 2, wherein the element evaluation unit evaluates the data element by using, as the specified standard, a transmitted information amount indicative of a dependency relationship between the data element and the classification information associated with the classification data including the data element.

4. The data analysis system according to claim 2 or 3, further comprising an evaluation storage unit that stores an evaluation result by the element evaluation unit in a specified storage device.

5. The data analysis system according to any one of claims 1 to 4, wherein the classification information is information indicating whether the user has written information on the web page or not.

6. The data analysis system according to any one of claims 1 to 5, wherein the classification information is information indicating that the web page, on which the user has written the information, is classified as a web page which attracts the user's interest; and
wherein the recommendation information is information about the web page estimated to attract the user's interest among the unclassified data.

7. The data analysis system according to any one of claims 1 to 6, wherein the web page includes advertisement information to recommend purchase of a product and the recommendation information is the advertisement information.

8. The data analysis system according to any one of claims 1 to 7, wherein the classification information is information indicative of classification as to whether the web page includes malicious information or not;
wherein the data analysis system further comprises a judgment information acquisition unit that acquires judgment information for judging whether the web page is malicious or not, according to input from the user;
wherein the data classification unit classifies the classification data on the basis of the judgment information; and
wherein the recommendation information is information about the web page estimated to be malicious among the unclassified data.

9. The data analysis system according to any one of claims 1 to 8, wherein the unclassified data is data including at least evaluation of an event by the user;
an emotion extraction unit that extracts, from the unclassified data, an emotion of the user, who has created the unclassified data, about the event which has occurred based on the evaluation; and
wherein the presentation unit presents the recommendation information further according to an extraction result by the emotion extraction unit.

10. The data analysis system according to claim 9, further comprising an emotion storage unit that associates a data element included in data with an emotion evaluation of the data element and stores them in a specified storage device, wherein the emotion extraction unit extracts the emotion from the unclassified data by evaluating the unclassified data by using the emotion evaluation associated with the data element.

11. A data analysis method executed by an information processing apparatus, the method comprising:

a classification information acquisition step of acquiring classification information indicative of classification of a web page;
a collection step of collecting a plurality of web pages on a network as a data group;
a data classification step of classifying each of a plurality of pieces of classification data, which is part of the plurality of web pages included in the data group, by associating the classification information with each of the plurality of pieces of classification data;
a data evaluation step of evaluating a relation between unclassified data that is a web page, which is part of the plurality of web pages included in the data group and is different from the classification data, and the classification information according to a classification result in the data classification step; and
a presentation step of presenting recommendation information to a user on the basis of the evaluation in the data evaluation step.

**12.** A data analysis program for having a computer execute data analysis processing for analyzing data, the data analysis processing comprising:

a classification information acquisition step of acquiring classification information indicative of classification of a web page;

a collection step of collecting a plurality of web pages on a network as a data group;

a data classification step of classifying each of a plurality of pieces of classification data, which is part of the plurality of web pages included in the data group, by associating the classification information with each of the plurality of pieces of classification data;

a data evaluation step of evaluating a relation between unclassified data that is a web page, which is part of the plurality of web pages included in the data group and is different from the classification data, and the classification information according to a classification result in the data classification step; and

a presentation step of presenting recommendation information to a user on the basis of the evaluation in the data evaluation step.

# FIG.1

# FIG.2

# FIG.3

```
                    ┌──────────────┐
                    │    START     │
                    └──────┬───────┘
                           │                    ⟋ S301
         ┌─────────────────▼─────────────────┐
         │     Collect a plurality of pieces │
         │         of website information    │
         │            accessed by user       │
         └─────────────────┬─────────────────┘
                           │                    ⟋ S302
         ┌─────────────────▼─────────────────┐
         │        Accept classification      │
         │              information          │
         └─────────────────┬─────────────────┘
                           │                    ⟋ S303
         ┌─────────────────▼─────────────────┐
         │    Classify website information   │
         │         accessed by user in       │
         │       accordance with accepted    │
         │        classification information │
         └─────────────────┬─────────────────┘
                           │                    ⟋ S304
         ┌─────────────────▼─────────────────┐
         │      Extract data elements from   │
         │           website information     │
         │             accessed by user      │
         └─────────────────┬─────────────────┘
                           │                    ⟋ S305
         ┌─────────────────▼─────────────────┐
         │       Calculate evaluations of    │
         │   extracted data elements based   │
         │      on classification information │
         └─────────────────┬─────────────────┘
                           │                    ⟋ S306
         ┌─────────────────▼─────────────────┐
         │  Store extracted data elements    │
         │    and calculated evaluations     │
         │            in memory unit         │
         └─────────────────┬─────────────────┘
                           │
                    ┌──────▼───────┐
                    │     END      │
                    └──────────────┘
```

# FIG.4

```
                    ┌──────────────┐
                    │    START     │
                    └──────┬───────┘
                           │                        ⌇S401
              ┌────────────▼─────────────┐
              │ Collect a plurality of   │
              │ pieces of website        │
              │ information that is      │
              │ not accessed by user     │
              └────────────┬─────────────┘
                           │                        ⌇S402
              ┌────────────▼─────────────┐
              │  Extract data elements   │
              │  from website            │
              │  information that is      │
              │  not accessed by user    │
              └────────────┬─────────────┘
                           │                        ⌇S403
              ┌────────────▼─────────────┐
              │  Evaluate extracted data │
              │  elements based on stored│
              │  evaluations of data     │
              │  elements                │
              └────────────┬─────────────┘
                           │                        ⌇S404
              ┌────────────▼─────────────┐
              │ Evaluate website         │
              │ information based on     │
              │ evaluated data elements  │
              └────────────┬─────────────┘
                           │                        ⌇S405
              ┌────────────▼─────────────┐
              │  Generate recommended    │
              │  information based on    │
              │  evaluation of website   │
              │  information             │
              └────────────┬─────────────┘
                           │                        ⌇S406
              ┌────────────▼─────────────┐
              │   Present generated      │
              │   recommended information│
              │   to user                │
              └────────────┬─────────────┘
                           │
                    ┌──────▼───────┐
                    │     END      │
                    └──────────────┘
```

# FIG.5

## INTERNATIONAL SEARCH REPORT

| International application No. |
| --- |
| PCT/JP2014/084713 |

**A. CLASSIFICATION OF SUBJECT MATTER**
*G06F17/30(2006.01)i*

According to International Patent Classification (IPC) or to both national classification and IPC

**B. FIELDS SEARCHED**

Minimum documentation searched (classification system followed by classification symbols)
G06F17/30

Documentation searched other than minimum documentation to the extent that such documents are included in the fields searched
| Jitsuyo Shinan Koho | 1922–1996 | Jitsuyo Shinan Toroku Koho | 1996–2015 |
| Kokai Jitsuyo Shinan Koho | 1971–2015 | Toroku Jitsuyo Shinan Koho | 1994–2015 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X<br>Y | JP 2013-235507 A (Mynd Inc.),<br>21 November 2013 (21.11.2013),<br>paragraphs [0046] to [0140], [0159]; fig. 3 to 16<br>& US 2013/0304469 A1 | 1-2,5-7,<br>11-12<br>3-4,8-10 |
| Y | JP 5603468 B1 (UBIC, Inc.),<br>08 October 2014 (08.10.2014),<br>paragraph [0091]<br>& JP 2015-32030 A　　& WO 2015/015826 A1<br>& TW 201504836 A | 3-4 |
| Y | JP 2011-170786 A (Nomura Research Institute, Ltd.),<br>01 September 2011 (01.09.2011),<br>paragraphs [0043] to [0084]; fig. 9 to 16<br>(Family: none) | 8 |

|☒| Further documents are listed in the continuation of Box C. | |☐| See patent family annex. |

| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>02 June 2015 (02.06.15) | Date of mailing of the international search report<br>09 June 2015 (09.06.15) |
| --- | --- |
| Name and mailing address of the ISA/<br>Japan Patent Office<br>3-4-3,Kasumigaseki,Chiyoda-ku,<br>Tokyo 100-8915,Japan | Authorized officer<br><br><br>Telephone No. |

Form PCT/ISA/210 (second sheet) (July 2009)

**INTERNATIONAL SEARCH REPORT**

International application No.

PCT/JP2014/084713

C (Continuation).    DOCUMENTS CONSIDERED TO BE RELEVANT

| Category* | Citation of document, with indication, where appropriate, of the relevant passages | Relevant to claim No. |
|---|---|---|
| Y | JP 2013-8095 A  (Rakuten, Inc.),<br>10 January 2013 (10.01.2013),<br>paragraphs [0078] to [0080]; fig. 5 to 6<br>& US 2014/0114847 A1    & WO 2012/176496 A1<br>& EP 2725502 A1          & TW 201301175 A<br>& AU 2012274725 A1       & CN 103649952 A | 9-10 |

Form PCT/ISA/210 (continuation of second sheet) (July 2009)

**EP 3 089 049 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012142704 A